# EUROPEAN PATENT APPLICATION

(11) **EP 1 553 115 A2**
(43) Date of publication of application: **13.07.2005**
(21) Application number: 05250048.5
(22) Date of filing: 07.01.2005
(51) Int. Cl.: C08F 255/00, C10M 149/00

(54) **Graft copolymers, method of making and compositions containing the same**

(30) Priority: 09.01.2004 US 755015
(71) Applicant: Afton Chemical Corporation, Richmond, VA 23219 (US)
(72) Inventor: Mishra, Munmaya K., Richmond, VA 23233 (US); Srinivasan, Sanjay, Richmond, VA 23294 (US)
(74) Representative: Cresswell, Thomas Anthony

(57) **Abstract**

Graft copolymers, particularly useful as dispersant viscosity index improvers in lubricating oil compositions have a polymer backbone selected from the group consisting of olefin polymers, diene polymers, vinyl polymers and vinylidene polymers, which is grafted with an amine selected from N-p-diphenylamine,1,2,3,6-tetrahydrophthalimide; 4-anilinophenyl methacrylamide; 4-anilinophenyl maleimide; 4-anilinophenyl itaconamide; acrylate and methacrylate esters of 4-hydroxydiphenylamine; the reaction product of p-aminodiphenylamine or p-alkylaminodiphenylamine with glycidyl methacrylate; the reaction product of p-aminodiphenylamine with isobutyraldehyde, derivatives of p-hydroxydiphenylamine; derivatives of phenothiazine; vinylogous derivatives of diphenylamine; and mixtures thereof and may be prepared in a single step process using solution or bulk grafting conditions.

## Description

### FIELD

The embodiments relate to graft copolymers, lubricating compositions comprising the graft copolymers, and engines lubricated with such compositions. Other embodiments relate to the process of making the graft polymers and to the use of such graft polymers to lubricate an engine.

### BACKGROUND

Lubricating oils, and more particularly those used in the crankcase of internal combustion engines, are known to contain various additives for improving the performance of said oils during their use. Some additives are used to increase the oil viscosity index while others ensure, for instance, that the insoluble deposits that will form in the oil are maintained in a suspended state.

The additives used for improving the oil viscosity index must have, on the one hand, a sufficient thickening effect on a light lubricating oil at high temperatures to make the lubricating properties of said oil similar to those of a heavier lubricating oil and, on the other hand, a limited thickening effect on a light lubricating oil at low temperatures to avoid impairing the properties of said oil at said low temperatures. They are generally long-chain polymer compounds such as, for example, polyisobutene, polymethacrylates, polyalkylstyrenes, partially hydrogenated copolymers of butadiene and styrene, and amorphous copolymers of ethylene and propene.

Additives for lubricating oils have also been proposed to provide simultaneously the improvement of the oil viscosity index and the dispersion of the slurry they may contain. Such additives are, for example, graft copolymers resulting from the grafting of acrylonitrile or aminoalkyl methacrylates on amorphous copolymers of ethylene and propene, or also statistic copolymers obtained by radical polymerization of acrylates or alkyl methacrylates with vinyllactames such as N-vinylpyrrolidone or aminoalkyl methacrylates.

Improved graft copolymers and lubricating oil compositions, particularly for EGR engines are needed, as is an improved process of making same.

### SUMMARY OF THE EMBODIMENTS

In an embodiment is provided a graft copolymer comprising a polymer backbone which has been reacted with an amine selected from the group consisting of N-p-diphenylamine,1,2,3,6-tetrahydrophthalimide; 4-anilinophenyl methacrylamide; 4-anilinophenyl maleimide; 4-anilinophenyl itaconamide; acrylate and methacrylate esters of 4-hydroxydiphenylamine; the reaction product of p-aminodiphenylamine or p-alkylaminodiphenylamine with glycidyl methacrylate; the reaction product of p-aminodiphenylamine with isobutyraldehyde, derivatives of p-hydroxydiphenylamine; derivatives of phenothiazine; vinylogous derivatives of diphenylamine; and mixtures thereof.

In another embodiment is provided a process of making a graft copolymer comprising the step of grafting a polymer backbone with an amine reactant selected from the group consisting of N-p-diphenylamine,1,2,3,6-tetrahydrophthalimide; 4-anilinophenyl methacrylamide; 4-anilinophenyl maleimide; 4-anilinophenyl itaconamide; acrylate and methacrylate esters of 4-hydroxydiphenylamine; the reaction product of p-aminodiphenylamine or p-alkylaminodiphenylamine with glycidyl methacrylate; the reaction product of p-aminodiphenylamine with isobutyraldehyde, derivatives of p-hydroxydiphenylamine; derivatives of phenothiazine; vinylogous derivatives of diphenylamine; and mixtures thereof.

A lubricating oil composition is provided in an embodiment, comprising a base oil and a polymer backbone which has been grafted with a reactant selected from the group consisting of N-p-diphenylamine,1,2,3,6-tetrahydrophthalimide; 4-anilinophenyl methacrylamide; 4-anilinophenyl maleimide; 4-anilinophenyl itaconamide; acrylate and methacrylate esters of 4-hydroxydiphenylamine; the reaction product of p-aminodiphenylamine or p-alkylaminodiphenylamine with glycidyl methacrylate; the reaction product of p-aminodiphenylamine with isobutyraldehyde, derivatives of p-hydroxydiphenylamine; derivatives of phenothiazine; vinylogous derivatives of diphenylamine; and mixtures thereof. In an embodiment, the graft copolymer is used as a viscosity index improver and is present in the oil composition in an amount sufficient to reduce the amount of oil thickening of the lubricating oil.

A further embodiment provides a lubricated engine comprising an exhaust gas recirculation system, whereby exhaust gases comprising soot generated in the combustion in the engine of fuel contact a lubricating oil used to lubricate said engine, wherein said lubricating oil comprises: a base oil and a graft copolymer comprising a polymer backbone which has been grafted with a reactant selected from the group consisting of N-p-diphenylamine,1,2,3,6-tetrahydrophthalimide; 4-anilinophenyl methacrylamide; 4-anilinophenyl maleimide; 4-anilinophenyl itaconamide; acrylate and methacrylate esters of 4-hydroxydiphenylamine; the reaction product of p-aminodiphenylamine or p-alkylaminodiphenylamine with glycidyl methacrylate; the reaction product of p-aminodiphenylamine with isobutyraldehyde, derivatives of p-hydroxydiphenylamine; derivatives of phenothiazine; vinylogous derivatives of diphenylamine; and mixtures thereof.

Another important embodiment provides a graft copolymer dispersant viscosity index improver that is free of any maleic anhydride moiety.

It is to be understood that both the foregoing general description and the following detailed description are exemplary and explanatory only and are intended to provide further explanation of the present invention, as claimed.

### BRIEF DESCRIPTION OF THE DRAWING FIGURE

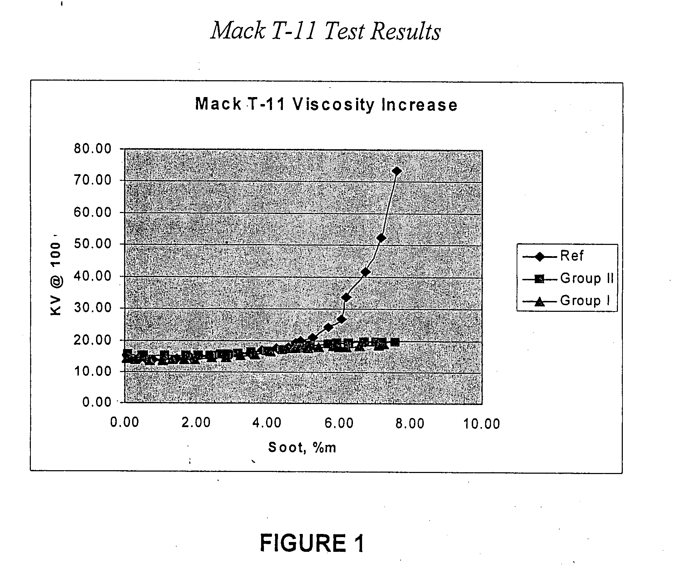

Figure 1 is a graph showing viscosity increase in test oils in connection with the Mack T-11 Test procedure.

### DETAILED DESCRIPTION OF THE EMBODIMENTS

The polymer backbone used for making the graft copolymers of the embodiments may include polyisobutene, polyalkylstyrenes, partially hydrogenated polyolefins of butadiene and styrene, amorphous polyolefins of ethylene and propylene, and isoprene copolymers. The polymers contemplated for use include olefin polymers such as various forms of polyethylene, propylene, isoprene, ethylene-propylene copolymers, and the like; polymers from dienes including styrene butadiene rubber, polyisoprene, ethylene-propylene diene terpolymers (EPDM), and the like; and vinyl and vinylidene polymers including acrylic polymers such as polymethylmethacrylate, polystyrene and its family of copolymers such as butadiene-styrene, and the like.

As used herein, the term "polymer" is used broadly to encompass any molecule that is comprised of one or more repeating monomer units, and includes copolymers, terpolymers, interpolymers, etc. The term "copolymer" is used broadly to mean any polymer that is comprised of more than one monomer unit.

Copolymers of ethylene and one or more C₃ to C₂₃ alpha-olefins and polymers and copolymers of isoprene are useful. Copolymers of ethylene and propylene are very effective. Other alpha-olefins suitable in place of propylene to form the copolymer or to be used in combination with ethylene and propylene to form a terpolymer include 1-butene, 1-pentene, 1-hexene, 1-octene and styrene; α,ω-diolefins such as 1,5-hexadiene, 1,6-heptadiene, 1,7-octadiene; branched chain alpha-olefins such as 4-methylbutene-1, 5-methylpentene-1 and 6-methylheptene-1; and mixtures thereof.

More complex polymer backbones, often designated as interpolymers, may be prepared using a polyene monomer selected from non-conjugated dienes and trienes. The non-conjugated diene component is one having from 5 to 14 carbon atoms in the chain. In one embodiment, the diene monomer is characterized by the presence of a vinyl group in its structure and can include cyclic and bicyclo compounds. Representative dienes include 1, 4-hexadiene, 1,4-cyclohexadiene, dicyclopentadiene, 5-ethylidene-2-norbornene, 5-methylene-2-norborene, 1,5-heptadiene, and 1,6-octadiene. A mixture of more than one diene can be used in the preparation of the interpolymer. In another embodiment, a non-conjugated diene for preparing a terpolymer or interpolymer backbone is 1,4-hexadiene.

The triene component will have at least two non-conjugated double bonds, and up to about 30 carbon atoms in the chain. Typical trienes useful in preparing the interpolymer of the invention are 1-isopropylidene-3α,4,7,7α-tetrahydroindene, 1-isopropylidenedicyclopentadiene, dihydro-isodicyclopentadiene, and 2-(2-methylene-4-methyl-3-pentenyl)[2.2.1]bicyclo-5-heptene.

Ethylene-propylene or higher alpha-olefin copolymers may consist of from about 15 to 80 mole percent ethylene and from about 85 to 20 mole percent C₃ to C₂₃ alpha-olefin with the mole ratios being from about 35 to 75 mole percent ethylene and from about 65 to 25 mole percent of a C₃ to C₂₃ alpha-olefin. In another embodiment, the proportions are from 50 to 70 mole percent ethylene and 50 to 30 mole percent C₃ to C₂₃ alpha-olefin. In yet another example, the proportions are from 55 to 65 mole percent ethylene and 45 to 35 mole percent C₃ to C₂₃ alpha-olefin. Terpolymer variations of the foregoing polymers may contains from about 0.1 to 10 mole percent of a non-conjugated diene or triene.

The polymer backbone can be an oil-soluble, linear or branched polymer having a weight average molecular weight of from about 20,000 to about 500,000 and polydispersities from about 1 to about 15

Saturated and partially unsaturated polymers are useful. The polymer backbone may be crystalline, semi-crystalline, or amorphous types of the aforementioned polymers and copolymers are also contemplated for use in the methods of this invention. High Mooney amorphous polymers are also suitable.

Specific materials which may be useful as the polymer backbone include: Mitsui XLL-10, XLM-12, XLH-15 and XLH-17 amorphous ethylene/propylene rubbers sold by Mitsui Petrochemical Industries, Ltd., Tokyo, Japan; VISTALON ethylene/propylene polyolefins, sold by Exxon Chemical Americas, Houston, Texas; Shell Vis polymers, such as, SV-250 hydrogenated isoprene copolymer, SV-200 and SV-300 styrene/isoprene polymers, and SV-40 and SV-50 styrene/butadiene polymers sold by Shell Chemical Co., Houston, Texas; Dutral CO and Dutral CT amorphous ethylene/propylene elastomers, such as, CO-034 and C-043, Buna EPM copolymers sold by Bayer Corporation, Akron, Ohio; and Lubrizol®-7441 and -7340 polymers sold by Lubrizol Corporation, Wickliffe, Ohio.

Combinations and mixtures of polymers of the types mentioned above may also be used to advantage.

The polymerization reaction used to form the polymer backbone is generally carried out in the presence of a catalyst. Ziegler-Natta and metallocene catalysts are typical, particularly for making ethylene-propylene copolymers. The polymerization medium is not specific and can include solution, sluny, or gas phase processes, as known to those skilled in the art. When solution polymerization is employed, the solvent may be any suitable inert hydrocarbon solvent that is liquid under reaction conditions for polymerization; examples of satisfactory hydrocarbon solvents include straight chain paraffins having from 5 to 8 carbon atoms. Hexane is a particularly useful solvent for making ethylene-propylene copolymers. Aromatic hydrocarbons, preferably aromatic hydrocarbon having a single benzene nucleus, such as benzene, toluene and the like; and saturated cyclic hydrocarbons having boiling point ranges approximating those of the straight chain paraffinic hydrocarbons and aromatic hydrocarbons described above, are particularly suitable. The solvent selected may be a mixture of one or more of the foregoing hydrocarbons. When slurry polymerization is employed, the liquid phase for polymerization is preferably liquid propylene. It is desirable that the polymerization medium be free of substances that will interfere with the catalyst components.

An amine reactant is grafted onto the prescribed polymer backbone to form the resulting graft copolymer. The amine reactants are selected from the group consisting of N-p-diphenylamine,1,2,3,6-tetrahydrophthalimide; 4-anilinophenyl methacrylamide; 4-anilinophenyl maleimide; 4-anilinophenyl itaconamide; acrylate and methacrylate esters of 4-hydroxydiphenylamine; the reaction product of p-aminodiphenylamine or p-alkylaminodiphenylamine with glycidyl methacrylate; the reaction product of p-aminodiphenylamine with isobutyraldehyde, derivatives of p-hydroxydiphenylamine; derivatives of phenothiazine; and vinylogous derivatives of diphenylamine. Mixtures of these reactants may also be used to advantage.

The amine reactants have the following structures:
**N-p-diphenylamine,1,2,3,6-tetrahydrophthalimide:** 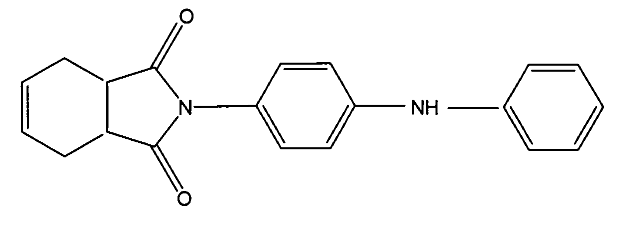
**4-anilinophenyl methacrylamide:.** (available under the tradename POLYSTAY® from Goodyear Tire & Rubber Co. in Akron, Ohio) 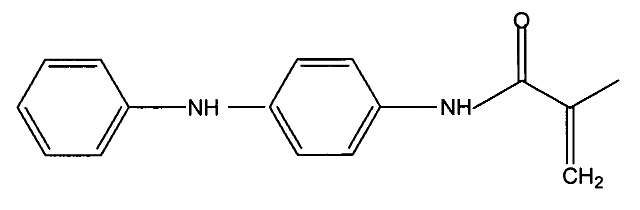
**N-(4-anilinophenyl) maleimide:** 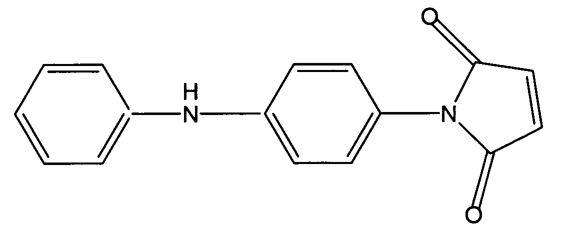
**N-(4-anilinophenyl) itaconamide:** 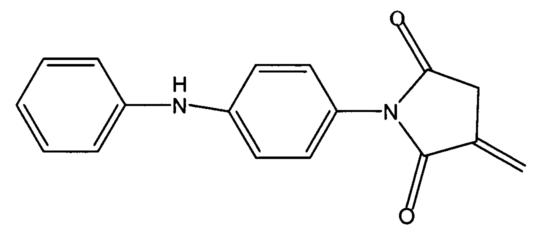
**Acrylate and methacrylate esters of 4-hydroxydiphenylamine:** 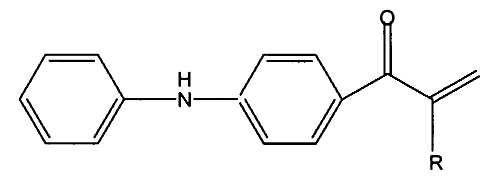 wherein R is selected from the group consisting of H and an alkyl having 1 to 4 carbon atoms.
**The reaction product of p-aminodiphenylamine or p-alkylaminodiphenylamine with glycidyl methacrylate:** 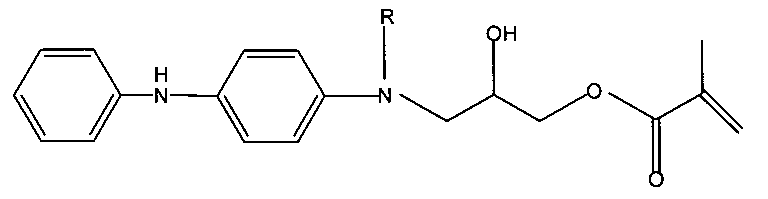 wherein R is selected from the group consisting of H and an alkyl having 1 to 4 carbon atoms.
**Vinylogous diphenylamine derivatives:** 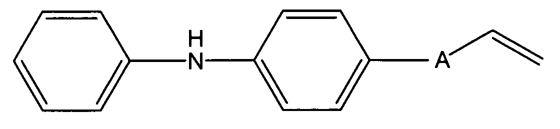 wherein A is selected from:
   -CH₂SO₂NH-; -SO₂NH-; 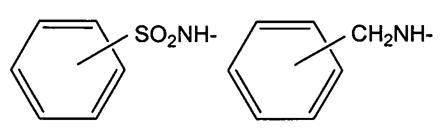 and 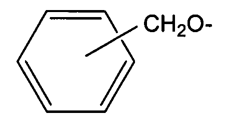
**The reaction product of p-aminodiphenylamine with isobutyraldehyde:** 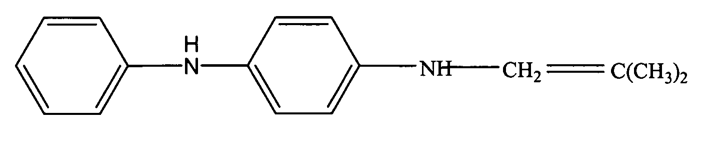
**p-Hydroxydiphenylamine derivatives:** 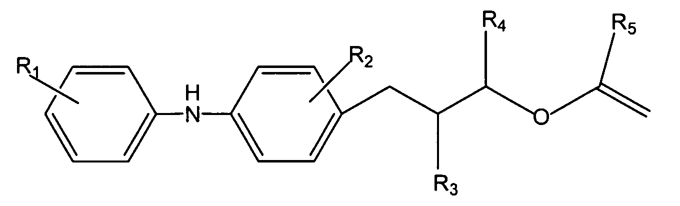 wherein R₁ and R₂ may be the same or different and are selected from the group of radicals consisting of hydrogen, alkyls having 1 to 18 carbon atoms, aryls having 6 to 18 carbon atoms, alkaryls having 7 to 18 carbon atoms and aralkyls having 7 to 18 carbon atoms;
   wherein R₃ and R₄ may be the same or different and are selected from the group of radicals consisting of hydrogen and methyl; and
   wherein R₅ is a radical selected from the group consisting of alkenyls having 2 to 18 carbon atoms.
**Phenothiazine derivatives:** 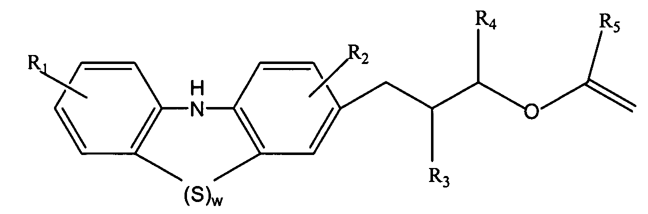 wherein R₁ and R₂ may be the same or different and are selected from the group of radicals consisting of hydrogen, alkyls having 1 to 18 carbon atoms, aryls having 6 to 18 carbon atoms, alkaryls having 7 to 18 carbon atoms and aralkyls having 7 to 18 carbon atoms;
   wherein R₃ and R₄ may be the same or different and are selected from the group of radicals consisting of hydrogen and methyl; and
   wherein R₅ is a radical selected from the group consisting of alkenyls having 2 to 18 carbon atoms, and w 1.

In one embodiment, the amine reactant is grafted onto the prescribed polymer backbone to provide a graft polymer having from 0.5 to 10 weight percent of the pendent groups. In another embodiment, the pendent groups will comprise from 1 to about 8 weight percent of the graft copolymer. The amount of amine reactants desired in the final polymer will depend on the desired end properties and intended use of the graft polymer. For one embodiment, the minimum level of functionality is the level needed to achieve the minimum satisfactory dispersancy performance in the lubricated cooled EGR engines.

Grafting of the amine-functional monomer onto the polymer backbone can be accomplished either in solution using a solvent or under reactive extrusion conditions in the presence or absence of solvent. The amine-functional monomer may be grafted onto the polymer backbone in multiple ways. In one embodiment, the grafting takes place by a thermal process via an "ene" reaction. In another embodiment the grafting is carried out in solution or solid form through a free radical initiator. Solution grafting is a well known method for producing grafted polymers. In such a process, reagents are introduced either neat or as solutions in appropriate solvents. The desired polymer product must sometimes then be separated form the reaction solvents and/or impurities by appropriate purification steps.

The free radical catalyzed grafting of the polymer with the functional monomers can be carried out in solvents like benzene, toluene, xylene, or hexane. The reaction is carried out at an elevated temperature in the range of 100°C to 250°C., preferably 120°C to 230°C, and more preferably at 160°C to 200°C., e.g. above 160°C, in a solvent, preferably a mineral lubricating oil solution containing, e.g. 1 to 50, preferably 5 to 40 wt.%, based on the initial total oil solution of the said polymer and preferably under an inert environment.

The free-radical initiators that may be used include peroxides, hydroperoxides, and azo compounds. Particularly useful are free-radical initiators that have a boiling point greater than about 100°C and decompose thermally within the grafting temperature range to provide free radicals. Examples of such initiators include alkyl and dialkyl peroxides, aryl and diaryl peroxides diacyl peroxides, ketone peroxides, peroxydicarbonates, peroxyesters, peroxyketals, hydroperoxides and azo initiators. Representative initiators are disclosed in U.S. Pat. No. 4,146,489, which is incorporated herein by reference. Specific initiators contemplated herein include, for example, di-t-butyl peroxide; dicumyl peroxide; t-butyl-cumyl peroxide; t-butyl perbenzoate; t-amyl perbenzoate; t-butyl peroxyacetate; t- butyl peroxy benzoate; t-butyl peroctoate; benzoyl peroxide; di-t-butyl peroxy phthalate; 2,5,-dimethyl-2,5,-di(t-butyl peroxy)hexane; 2,5,-dimethyl-2,5,-di(t-butyl peroxy)hexyne; butanenitrile,2-methyl,2,23-azobis; propanenitrile,2-methyl,2,23-azobis; 2,23-azobis(2,4-dimethylpentane nitrile); 1,13-azobis(cyclohexanecarbonitrile); azoisobutyronitrile (AIBN); hydrogen peroxide; 2,5-dihydroperoxy-2,5-dimethyl hexane (Luperox®, Elf Atochem, Philadelphia, Pa); cumene hydroperoxide; t-butylhydroperoxide; t-amylhydroperoxide. Any of the above classes of initiators or specifically listed initiators may be used in combination to provide optimal radical initiation throughout the entire reaction process. In one embodiment, the grafting reaction is carried out in solution in the presence of a peroxide catalyst.

Each such initiator commonly has a characteristic minimum temperature, above which it will readily initiate a reaction and below which initiation will proceed more slowly or not at all. Consequently, the minimum reaction temperature is commonly dictated by the effective characteristic minimum initiation temperature of the initiator.

One category of solvents useful herein is that of volatile solvents that are readily removable from the grafted polyolefin after the reaction is complete. Any solvent may be used which can disperse or dissolve the remaining components of the reaction mixture and which will not participate appreciably in the reaction or cause side reactions to a material degree. Exemplary solvents of this type include straight chain or branched aliphatic or alicyclic hydrocarbons, such as n-pentane, n-heptane, i-heptane, n-octane, i-octane, nonane, decane, cyclohexane, dihydronaphthalene, decahydronaphthalene and others. Aliphatic ketones (for example, acetone), ethers, esters, etc., and mixtures thereof are also contemplated as solvents herein. Nonreactive halogenated aromatic hydrocarbons such as chlorobenzene, dichlorobenzene, di-chlorotoluene and others are also useful as solvents.

Another category of solvents useful herein is a base oil stock which has a low aromatic content and which will be suitable for incorporation into a final lubricating oil product. Any base oil may be used which can disperse or dissolve the remaining components of the reaction mixture without materially participating in the reaction or causing side reactions to an unacceptable degree. Specifically, hydrocracked base oils, base oils naturally containing low levels of aromatic constituents, and fluid poly-.alpha.-olefins are contemplated for use herein. Aromatic constituents should be kept to low levels (if present at all), since aromatic materials may be reactive with each other or other reaction components, particularly in the presence of initiators. The other reaction components thus may either be wasted, or produce unwanted by-products, unless the presence of aromatic constituents is small. Use of base stocks having aromatic constituents, while being less than optimum, is not excluded.

The level of aromatic constituents in a refined petroleum oil is sometimes expressed as the weight percentage of molecular species containing any proportion of aromatic carbon atoms, and other times is expressed as the weight percentage of only the aromatic carbon atoms. The former value can be much greater than the latter value. In this specification, the "level of aromatic constituents" is defined as the weight percentage of molecular species containing any proportion of aromatic carbon atoms. The petroleum oil solvents contemplated here are those containing less than about 20% by weight of molecular aromatic impurities, alternatively less than about 5% by weight of such impurities, alternatively less than about 1% of such impurities, alternatively about 0.2% or less of such impurities.

Also contemplated for use herein are oils prepared by sulphonation technology like Witco LMW Co-oil R-211-0, for which the aromatic content is about 0.1-5 wt %. Further contemplated for use herein are the no aromatic content oils, which are synthetic lubricant base stocks like PAO.

It is well known that solution grafting of polymers in mineral oil can lead to cross-linking of the polymer and grafting of the oil with the monomer. The resulting grafted polymer differs significantly in its thickening efficiency and shear stability from the starting polymer, which is not desirable. This can be a disadvantage when the graft copolymers are to be used as lubricating oil additives. To overcome this problem, it is desirable to conducting the solution grafting reaction at elevated temperatures (i.e., >190°C) in mineral oil using t-butyl peroxide. By carrying out the polymer grafting reaction at 190°C or above, one can suppress or minimize homopolymerization of the functional monomer as well as minimize cross-linking of the polymer and undesired reactions such as grafting the oil by the functional monomer. The high concentration of free radicals generated at the high temperature greatly facilitates the abstraction of hydrogen from the polymer backbone and thereby increases the grafting efficiency with minimal side reactions.

The present reaction can be carried out as follows. The polymer to be grafted is provided in fluid form. For example, the polymer may be ground and dissolved in a reaction solvent, which may be a base oil for a lubricating composition or another suitable solvent. When the polymerization is carried out in hexane solution, it is economically convenient but not required herein to carry out the grafting reaction in hexane as described in U.S. Patents 4,670,515 and 4,948,842, incorporated herein by reference. This step can be carried out under an inert gas blanket, or with an inert gas purge, at a temperature lower than the reaction temperature, typically from 60 °C to about 120°C, for example, about 100°C. The mixing temperature will normally be less than the reaction temperature. Holding the mixture at a higher temperature may degrade the components while they are still exposed to some degree to oxygen from the atmosphere. The reaction mixture can also be prepared as a melt of the desired polymer, with or without any added solvent or plasticizer.

The reaction mixture thus formed is placed in a suitable reactor that is purged or blanketed with an inert gas (which may be, for example, nitrogen, carbon dioxide, helium, or argon). A tank reactor may be used or, particularly if the reaction is carried out using a molten polymer, an extrusion reactor may be used.

The polymer solution or melt is heated to the desired reaction temperature. At a minimum, the reaction temperature should be sufficient to consume substantially all of the selected initiator during the time allotted for the reaction. Different initiators work at different rates according to the reaction temperature, and thus will require adjustments of the reaction temperature. After the reaction solution has reached the selected reaction temperature, the purge can be redirected to flow over the surface of the reaction mixture. At this time the reactants are ready to be added.

The contemplated proportions of the graft monomer to the polymer and reaction conditions are selected so that an effective percentage or most or all of the molecules of the monomer will graft directly onto the polymer, rather than forming dimeric, oligomeric, or homopolymeric graft moieties or entirely independent homopolymers. At the same time, a high loading of the graft monomer onto the polymeric backbone is contemplated. The minimum molar proportions of the graft monomer to the starting polymer are in the range of 15 to 100 moles of the graft monomer per mole of the starting polymer, said range induding all numbers encompassed therein. The contemplated maximum molar proportions of the graft monomer to the starting polymer are from 20 to 120 moles or more of the graft monomer per mole of the starting polymer, said range induding all numbers encompassed therein. The graft monomer may be introduced into the reactor all at once, in several discrete charges, or at a steady rate over an extended period.
The monomer can be added at a substantially constant rate, or at a rate that varies with time. The graft monomer may be added neat, in solid or molten form, or cut back with a solvent.

The contemplated proportions of the initiator to the monomer and the reaction conditions are selected so that at least many and ideally all of the molecules of the monomer will graft directly onto the polymer, rather than forming dimeric, oligomeric, or homopolymeric graft moieties or entirely independent homopolymers. The minimum molar proportions of the initiator to the graft monomer are from about 0.05:1 to about 1:1. The initiator can be added before, with or after the monomer, so the amount of unreacted initiator that is present at any given time is much less than the entire charge, and preferably a small fraction of the entire charge. In one embodiment, the initiator may be added after all the monomer has been added, so there is a large excess of both the monomer and the polymer present during substantially the entire reaction. In another embodiment, the initiator may be added along with the monomer, either at the same rate (measured as a percentage of the entire charge added per minute) or at a somewhat faster or slower rate, so there is a large excess of the polymer to unreacted initiator, but so the amount of the unreacted monomer is comparable to the amount of unreacted initiator at any given time during the addition.

The initiator may be introduced into the reactor in several (or, alternatively, many) discrete charges, or at a steady rate over an extended period. The initiator can be added at a substantially constant rate, or at a rate that varies with time. While the initiator can be added neat, it is preferably cut back with a solvent to avoid high localized proportions of the initiator as it enters the reactor. In one embodiment, it is substantially diluted with the reaction solvent. The initiator can be diluted by at least about 5 times, alternatively at least about 10 times, alternatively at least about 20 times its weight or volume with a suitable solvent or dispersing medium.

After the addition of reactants is completed, the reaction mixture is preferably mixed with heating for an additional 2-120 minutes, to completion. The time required for completion of the reaction can be determined by experiment, by determining when the proportion of nitrogen, or the grafted monomer in solution reaches a value at or approaching a minimum pre-established value, or when the viscosity approaches a near constant value.

While solution grafting has the advantages of using a relatively simplified process it does have some disadvantages in terms of side reactions and impurities, cross-linking of the polymer, grafting of the oil, availability and costs of solvent, practicality and economics of purification procedures, lower yield, insufficient degree of graft, product quality, as well as costs and logistics of transporting and storing the end product.

Methods that describe of preparation of grafted polymer products for application as dispersant viscosity index improvers in lubrication oil compositions require that the reaction polymer product be further processed in order to achieve the desired physical characteristics. For instance, to achieve a desired shear stability index (SSI), a measure of potential for in-service viscosity loss, the polymer product must be subjected to homogenization (i.e. mechanical shearing) in order to create a polymer product with uniform and consistent viscosity characteristics. The presence of undesirable reaction by-products is responsible, in part, for the necessity of such further processing. Thus, reducing the formation of reaction side products may also reduce or eliminate the necessity for downstream homogenization in order to achieve a polymer product with the desired finished characteristics.

Reactive extrusion grafting is another method for incorporating nitrogen, oxygen, and sulfur containing functionality on the polymer backbone and this method has certain advantages over the solution grafting method. Examples of extruders include single screw extruder and a co-rotating, twin-screw extruder. When using an extrusion polymerization process, devolatilization of the grafted polymer preferably occurs in one or more decompression sections of the extruder.

Also known are processes for carrying out multiple sequential chemical reactions on polymeric feedstock carried out in an extruder with multiple reaction zones. A key feature of the process is the removal of impurities from one reaction zone before a subsequent reaction occurs in a subsequent reaction zone in the extruder. Feeding water upstream of the first reaction zone leads to less colored products. Water may also be fed prior to the grafting reaction zone. It is understood that the water is not incorporated into the polymer when using the procedure outlined for introduction of the water into the extruder. Such processes are described in, for example, U.S. Pat. Nos. 5,424,367 and 5,552,096, incorporated herein by reference.

It is apparent from the above discussion that a variety of graft copolymers can be prepared according to the embodiments, including copolymers that are substantially or completely free of any maleic anhydride moieties. Maleic anhydride moiety free copolymers can easily be prepared, for example, by using an ethylene-propylene copolymer backbone and reacting it with, for example, 4-anilinodiphenyl methacrylamide.

In one embodiment, the grafting process provides amine-functional graft copolymers in a single step process. This is a significant advantage over most prior art processes in which a polymer backbone is reacted with, for example, a carboxylic acid reactant to form a graft copolymer, which then needs to be reacted again (i.e., neutralized) to obtain the anime-functional graft copolymer.

The graft copolymers of the embodiments will exhibit superior dispersant properties (as measured by the Sludge Dispersancy Test (SDT)). This test measures the ability of the dispersant to suspend and move sludge chromatographically along blotter paper. When a dispersant candidate is used, oil movement along the paper results in two rings. The inner ring constitutes the sludge being transported by the dispersant, and the outer ring comprises the base oil. The effectiveness of the dispersant is defined by the ratio of the diameter of the inner ring to the diameter of the outer ring. The higher the ratio for a particular candidate, the better the performance of that candidate as a dispersant. In each test, 6 wt. % of the additive will be mixed with 94% of a severely used oil from a VE engine test. The used oil, when stored overnight at 149° C. has given a dispersancy of 30 to 35% as defined by the ratio of the diameter of the inner ring of undispersed sludge on blotter paper to the diameter of the outer oil ring, times 100.

**TABLE I:**

| **SLUDGE DISPERSANCY TEST** | |
|---|---|
| **Additive** | **SDT Result** |
| Control | <35 |
| Comparative Example 1 | > 50 |
| Comparative Example II | > 50 |

U.S. Pat. No. 5,523,008, the disclosure of which is incorporated herein by reference, provides a test that can be used to determine proportions of nitrogen on the grafted polymer product and on any process fluids (assuming the reaction is carried out in the presence of a solvent and that solvent is not "flashed" or physically removed in some manner during the process). The results of this test can be used to determine the degree of grafting. If the grafted polymer products of the process of this invention contain any residual solvent, the solvent can be separated form the desired product by the methods described.

The level of grafted monomer can be determined using Infrared spectroscopy; a typical unit being the Perkin-Elmer GX 2000 Custom FTIR spectrometer. A suitable method is as follows: The polymer is dissolved in base oil, such as Excel 110N Gr.II oil and is then precipitated from the homogeneous solution using heptane followed by acetone or isopropyl alcohol. Sample of polymer in oil is diluted ~50% in pentane. While stirring, IPA is added dropwise, until a consistent flock is observed. The sample is stirred an additional 5 minutes and then allowed to settle for several hours (typically ovemight). The pentane/IPA is decanted or pipetted out of the sample jar. The polymer is then redissolved in pentane and the above procedure is repeated. Altematively, the sample may be dialyzed in pentane using a latex finger cot for a dialysis membrane. After 16 hours reflux, the dialysis residue is transferred to a jar and the pentane is sparged off using nitrogen and a steam bath.

A thin film is then prepared by placing the precipitate between Teflon® sheets, pressed for 30 - 60 sec at 20,000 lb-24,000 lb and 150 °C in a hydraulic press. The film is then mounted on the IR beam and the spectrum generated over the range of frequencies from 600 cm⁻¹ to 4000 cm⁻¹. In the case of 4-anilinophenyl methacrylamide as the grafted amine containing monomer, the spectral regions of interest are those due to the anilinophenyl methacrylamide moiety with peaks between 3310 - 3352 cm⁻¹ due amide/amine stretch, 1658 cm⁻¹ due to amide carbonyl and 1598 cm⁻¹ due to C-NH deformation (defined as Region 1) and those due to the polymer methylene group which ranges from about 685 cm⁻¹ to about 790 cm⁻¹ (defined as Region 2). The areas under these spectral regions, 1 and 2, are then determined by integration and the relative area of the product and is compared to that of a grafted polymer sample of a known dispersant functionality concentration. Based upon relative responses of "known" sample to "unknown" sample, the concentration of dispersant functionality may be established.

In one embodiment, the graft copolymers are is used as a soot dispersant viscosity index improver (DVII) in exhaust gas recirculation (EGR) engines, particularly cooled EGR engines. The cooled EGR engines include automotive engines, heavy and light duty diesel and gasoline truck engines, gasoline combustion engines, diesel engines, and hybrid internal combustion/electric engines. These can include EGR engines cooled by the circulation or heat exchange of water, water/hydrocarbon blends or mixtures, water/glycol mixtures, and/or air or gas. It is of course understood that other embodiments provide for the use of the graft copolymers in lubricating oil compositions for conventional, i.e., non-recirculating, engines as well.

The graft copolymer DVIIs used to lubricate the cooled EGR engines can be incorporated into a lubricating oil in any convenient way. Thus, the graft copolymers can be added directly to the lubricating oil by dispersing or dissolving the same in the lubricating oil at the desired level of concentration. Such blending into the lubricating oil can occur at room temperature or elevated temperatures. Altematively, the graft copolymers can be blended with a suitable oil-soluble solvent/diluent (such as benzene, xylene, toluene, lubricating base oils and petroleum distillates) to form a concentrate, and then blending the concentrate with a lubricating oil to obtain the final formulation. Such additive concentrates will typically contain (on an active ingredient basis) from about 3 to about 45 wt. %, and often from about 10 to about 35 wt. %, of graft copolymer additive, and more often from about 40 to 60 wt %, base oil based on the concentrate weight.

The graft copolymer products useful in lubricating oils to lubricate engines find their primary utility in lubricating oil compositions, which employ a base oil in which the additives are dissolved or dispersed. Such base oils may be natural, synthetic or mixtures thereof. Base oils suitable for use in preparing the lubricating oil compositions of the present invention include those conventionally employed as crankcase lubricating oils for spark-ignited and compression-ignited internal combustion engines, such as automobile and truck engines, marine and railroad diesel engines, and the like.

In the preparation of lubricating oil formulations it is common practice to introduce the additives in the form of 10 to 80 wt. % active ingredient concentrates in hydrocarbon oil, e.g. mineral lubricating oil, or other suitable solvent. Usually these concentrates may be diluted with 3 to 100, e.g., 5 to 40, parts by weight of lubricating oil per part by weight of the additive package in forming finished lubricants, e.g. crankcase motor oils. The purpose of concentrates, of course, is to make the handling of the various materials less difficult and awkward as well as to facilitate solution or dispersion in the final blend. Thus, the graft copolymer DVII would usually be employed in the form of a 10 to 50 wt. % concentrate, for example, in a lubricating oil fraction.

The amount of dispersant viscosity index improver in the lubricating oil in the cooled EGR engine can be from about 20 wt. % to about 18 wt. %.

The graft copolymer DVIIs used in an oil to lubricate the cooled EGR engines of the embodiments will generally be used in admixture with a lube oil basestock, comprising an oil of lubricating viscosity, including natural lubricating oils, synthetic lubricating oils and mixtures thereof. Natural oils include animal oils and vegetable oils (e.g., castor, lard oil), liquid petroleum oils and hydrorefined, solvent-treated or acid-treated mineral lubricating oils of the paraffinic, naphthenic and mixed paraffinic-naphthenic types. Oils of lubricating viscosity derived from coal or shale are also useful base oils. The synthetic lubricating oils used in this invention include one of any number of commonly used synthetic hydrocarbon oils, which include, but are not limited to, poly-alpha-olefins, alkylated aromatics, alkylene oxide polymers, interpolymers, copolymers and derivatives thereof where the terminal hydroxyl groups have been modified by esterification, etherification etc, esters of dicarboxylic acids and silicon-based oils. The lubricating oils may also contain additives selected from the group consisting of zinc dialkyl dithiophosphates, friction modifiers, antioxidants, defoamants, surfactants, corrosion inhibitors, extreme pressure agents, detergents, and pour point depressants.

Other embodiments provide a method of improving fuel economy and fuel economy durability of a vehicle having a cooled EGR engine, wherein said method comprises adding to and operating in the crankcase of the vehicle the lubricating oil composition containing the graft copolymer DVII described herein. The improved durability can extend the service time between oil drains in a vehicle equipped with an exhaust gas recirculation engine up to about 60,000 miles by the use a lubricating oil comprising the graft copolymer described herein in the engine.

Also provided is a method of simultaneously passing the M-11 EGR and T-10 tests (ASTM D4485 classification for C1-4 oils D02.B0 C1-4 Ballot) and the Mack T-11 test, which are cooled EGR engines. Said method comprises adding to and operating in the crankcase of the vehicle the lubricating oil composition containing the graft copolymer DVII described above.

The graft copolymers used in the oils to lubricate the cooled EGR engines of the embodiments may be post-treated so as to impart additional properties necessary or desired for a specific lubricant application. Post-treatment techniques are well known in the art and include boronation, phosphorylation, and maleination.

Lubricating oils containing the graft copolymers of the embodiments show superior engine performance. The Cummins M11 High Soot Test (HST) is run in a heavy-duty diesel engine under high soot conditions to evaluate oil performance with regard to valve train wear, sludge deposits, and oil filter plugging. This test method as described in the ASTM D 6838-02 document uses a Cummins M11 330 E 11I in-line turbocharged six-cylinder heavy-duty diesel engine. Test operation includes a 25-minute warm-up, a 2-hour break-in, and 200-hour run in four stages at 50 hours each. During stages A and C, the engine is operated with retarded fuel injection timing and is overfueled to generate excess soot. During stages B and D, the engine is operated at higher load conditions to induce valve train wear. Oil performance is determined by assessing valve cross-head wear, sludge deposits, and oil filter plugging.

**TABLE II:**

| **CUMMINS M11 EGR PERFORMANCE IN 15W40 OILS** | | |
|---|---|---|
| | **Blend 1** | **Blend 2** |
| **Component** | Wt. % | Wt. % |
| Non-dispersant VII "A" | 5.00 | 16.00 |
| Example 1 | 5.00 | 0.00 |
| PPD | 0.20 | 0.20 |
| Dispersant | 7.53 | 8.03 |
| Detergent | 5.16 | 4.31 |
| anti-wear + anti-oxidant +friction modifier + rust inhibitor | 2.65 | 3.51 |
| anti-foam agent | 0.01 | 0.01 |
| Base oil A | 74.45 | 67.94 |
| Total | 100.00 | 100.00 |
| | | |
| Crosshead Avg. Wear, Wt mg (20 max.) | <20 | 64.94 |
| Average Sludge (7.8 min.) | 8.7 - 9.0 | 8.95 |
| Filter Delta P, kPa (275 max.) | <30 | 157.20 |
| Soot Wt. % | 8.50 - 9.0 | 8.90 |
| Test Hours | 300 | 300 |

**TABLE III:**

| **CUMMINS M11 HIGH SOOT TEST PERFORMANCE IN 15W40 OILS** | | |
|---|---|---|
| | **Blend 3** | **Blend 4** |
| **Component** | Wt. % | Wt. % |
| Non-dispersant VII "B" | 0.00 | 7.20 |
| Example 1 | 8.30 | 0.00 |
| PPD | 0.20 | 0.20 |
| Dispersant | 5.03 | 9.50 |
| Detergent | 3.95 | 3.95 |
| anti-wear + anti-oxidant +friction modifier + rust inhibitor | 2.45 | 2.47 |
| anti-foam agent | 0.01 | 0.01 |
| Base oil B | 80.06 | 76.67 |
| Total | 100.00 | 100.00 |
| | | |
| Crosshead Avg. Wear, Wt mg (20 max.) | <6 | 3.2 |
| Average Sludge (7.8 min.) | 9.0 | 8.6 |
| Filter Delta P, kPa (275 max.) | <40 | 112.0 |
| Soot Wt. % | 5.0 - 5.4 | 5.4 |
| Test Hours | 200 | 200 |

15W40 Blend 1 containing graft copolymer according to the embodiments provides significantly better filter delta pressure in Cummins M11 EGR test in contrast to a 15W40 Blend 2 containing essentially a non-dispersant VII, which gives poor filter delta pressure performance in M11 EGR test (see Table I). Similarly a 15W40 Blend 3 containing a graft copolymer of the embodiments provides passing filter delta pressure in the Cummins M11 High Soot Test. A 15W40 blend prepared without the graft copolymer of the embodiments and containing a different non-dispersant VII B gives failing filter delta pressure performance. Tables II and III illustrate the beneficial effects of the graft copolymers of the embodiments with regard to significantly lowering filter delta pressure in a heavy-duty diesel engine.

It is known that hard soot particles cause abrasive wear on valve trains, rings, and liners. Thick lubricating oil films containing the graft copolymers described herein can significantly and surprisingly reduce this abrasive wear. Oils with good M-11 test performances form thick boundary films providing percent film resistance values of 80 to about 95 after 2000 seconds in the High Frequency Reciprocating Rig (HFRR) test.

EGR tests show soot thickening from the present embodiments superior to that seen in the T-8E test. Lubricating oils containing the graft copolymers described herein are successfully tested in cooled EGR engines from Cat, Mack, Cummins, Volvo, and Detroit Diesel. Lubricating oil films containing the graft copolymers of the embodiments provide excellent performance in the Mack T-11 test, reduce both high and low temperature thickening, give superior sludge performance, and give superior wear protection from soot.

The oils containing the graft copolymers as taught herein also have the following advantages when used in cooled EGR engines: excellent for building film strength and reducing wear; low treat rate of, for example, 8.5% wt. (~ 9.5% vol.) for 15W-40; strong sludge suppression performance; provides superior performance in EGR engines; good shear stability, permanent and HTHS; excellent dispersancy for soot handling and improved wear protection; allows for lower additive treat rate; and excellent used-oil low temperature viscosity properties, relative to the low temperature viscosity properties of oils not containing the graft copolymers.

Figure 1 illustrates that using a lubricating oil containing the graft copolymer described herein in a cooled EGR engine, the oil exhibits a kinematic viscosity at 100°C that does not increase rapidly in high soot loading, whereas the kinematic viscosity of the industry standard reference oil increases rapidly beyond the 4% soot loading level. Figure 1 shows viscosities for lubricating oils using Group I and Group II base oils.

Other embodiments of the present invention will be apparent to those skilled in the art from consideration of the specification and practice of the invention disclosed herein. It is intended that the specification and examples be considered as exemplary only, with a true scope and spirit of the invention being indicated by the following claims. This invention is susceptible to considerable variation in its practice. Accordingly, this invention is not limited to the specific exemplifications set forth hereinabove. Rather, this invention is within the spirit and scope of the appended claims, including the equivalents thereof available as a matter of law.

The patentee does not intend to dedicate any disclosed embodiments to the public, and to the extent any disclosed modifications or alterations may not literally fall within the scope of the claims, they are considered to be part of the invention under the doctrine of equivalents.

## Claims

1. A graft copolymer comprising a polymer backbone which has been grafted by reacting the polymer backbone with a reactant comprising N-p-diphenylamine,1,2,3,6-tetrahydrophthalimide; 4-anilinophenyl methacrylamide; 4-anilinophenyl maleimide; 4-anilinophenyl itaconamide; an acrylate or methacrylate ester of 4-hydroxydiphenylamine; a reaction product of p-aminodiphenylamine or p-alkylaminodiphenylamine with glycidyl methacrylate; a reaction product of p-aminodiphenylamine with isobutyraldehyde, a derivative of p-hydroxydiphenylamine; a derivative of phenothiazine; a vinylogous derivative of diphenylamine; or a mixture thereof.

2. A copolymer according to claim 1, wherein the polymer backbone comprises an olefin polymer; diene polymer; vinyl polymer or vinylidene polymer.

3. A copolymer according to claim 2, wherein the polymer backbone comprises an olefin polymer.

4. A copolymer according to claim 3, wherein the polymer backbone comprises an ethylene-olefin copolymer.

5. A copolymer according to any one of claims 1 to 4, wherein the polymer backbone comprises an ethylene-propylene copolymer and wherein the reactant is N-p-diphenylamine,1,2,3,6-tetrahydrophthalimide; 4-anilinophenyl methacrylamide; or a mixture thereof.

6. A copolymer according to any one of claims 1 to 3, wherein the polymer backbone comprises a styrene-isoprene copolymer.

7. A graft copolymer according to any one of claims 1 to 6, comprising a viscosity index improver and a soot dispersant.

8. A lubricating oil composition comprising a base oil mixed with a graft copolymer according to any one of claims 1 to 7.

9. A lubricating oil composition comprising a base oil and a dispersant viscosity index improver comprising a graft copolymer according to any one of claims 1 to 7.

10. A lubricating oil composition according to claim 8 or claim 9, comprising 2 to 18 weight percent of the graft copolymer.

11. A lubricating oil composition according to any one of claims 8 to 10, wherein the base oil comprises a natural lubricating oil, synthetic lubricating oil, animal oil, vegetable oil, castor oil, lard oil, liquid petroleum oil, hydrorefined, solvent-treated or acid-treated mineral lubricating oil of the paraffinic, naphthenic or mixed paraffinic-naphthenic type, oil of lubricating viscosity derived from coal or shale, poly-alpha-olefin, alkylated aromatic, alkylene oxide polymer, interpolymer, copolymers or derivatives thereof where the terminal hydroxyl groups have been modified by esterification or etherification, an ester of a dicarboxylic acid, silicon oil, or mixtures thereof.

12. A lubricating oil composition according to any one of claims 8 to 11, further comprising a zinc dialkyl dithiophosphate, a friction modifier, a corrosion inhibitor, an extreme pressure agent, an antioxidant, a defoamant, a surfactant, a detergent, or a pour point depressant.

13. A lubricating oil composition according to any one of claims 8 to 12, which passes the Mack T-11 test at a viscosity increase of less than 8 cSt at 100° C at a soot level of up to 6.09%m in the Mack T-11 test.

14. A lubricating oil composition according to any one of claims 8 to 13, which has a viscosity increase of less than 10 cSt at 100°C and up to 6.0%m soot in the Mack T-11 test.

15. Use of a graft polymer according to any one of claims 1 to 7 or a lubricating oil composition according to any one of claims 8 to 14 to lubricate an engine.

16. Use according to claim 15, wherein the engine comprises an automotive engine, heavy or light duty truck engine, gasoline combustion engine, diesel engine or hybrid Internal Combustion/electric engine.

17. Use according to claim 15, wherein the engine comprises an exhaust gas recirculation system, whereby exhaust gases comprising soot generated in the combustion in the engine of fuel contact the lubricating oil.

18. Use according to any one of claims 15 to 17, wherein the engine is cooled by the circulation of water, a water/hydrocarbon mix, water/glycol mix, air, or gas.

19. Use of a lubricating oil composition according to any one of claims 8 to 14 to reduce soot-induced thickening of the lubricating oil in a cooled exhaust gas recirculating engine in which soot accumulates in the oil.

20. Use of a lubricating oil composition according to any one of claims 8 to 14 in the crankcase of a vehicle having a cooled exhaust gas recirculation engine, to improve fuel economy, improve fuel economy durability, simultaneously pass the M-11 EGR test, T-10 test (ASTM D4485 classification for API C1-4 oils), and the Mack T-11 test, give superior oil sludge performance, or to give superior wear protection from soot.

21. Use of a graft copolymer according to any one of claims 1 to 7, to extend the service time between oil drains in a vehicle equipped with an exhaust gas recirculation engine up to about 60,000 miles, by addition to a lubricating oil in the engine.

22. A process of making a graft copolymer, comprising grafting a reactant comprising N-p-diphenylamine,1,2,3,6-tetrahydrophthalimide; 4-anilinophenyl methacrylamide; 4-anilinophenyl maleimide; 4-anilinophenyl itaconamide; an acrylate or methacrylate ester of 4-hydroxydiphenylamine; a reaction product of p-aminodiphenylamine or p-alkylaminodiphenylamine with glycidyl methacrylate; a reaction product of p-aminodiphenylamine with isobutyraldehyde, a derivative of p-hydroxydiphenylamine; a derivative of phenothiazine; a vinylogous derivative of diphenylamine; or a mixture thereof onto a polymer backbone.

23. A process according to claim 22, wherein the polymer backbone is as defined in any one of claims 2 to 6.

24. A process according to claim 22 or claim 23, wherein the grafting is carried out in solution.

25. A process according to any one of claims 22 to 24, wherein the grafting is carried out in the presence of a catalyst.

26. A process according to claim 25, wherein the catalyst comprises a peroxide catalyst.

27. A process according to any one of claims 22 to 26, wherein the grafting is carried out in bulk in an extruder or an intensive mixing device.

28. A process according to claim 22 or any one of claims 24 to 27, wherein the polymer backbone comprises a copolymer of ethylene, at least one C₃ to C₂₃ alpha-olefin, and optionally a non-conjugated diene or triene.
